# EUROPEAN PATENT SPECIFICATION

(11) **EP 2 796 317 B1**
(45) Date of publication and mention of the grant of the patent: **16.03.2016**
(21) Application number: 14165674.4
(22) Date of filing: 23.04.2014
(51) Int. Cl.: B60P 3/00, E04H 12/00, F03D 1/00

(54) **Assembly method of wind power generation system**
Montageverfahren für ein Windenergieerzeugungssystem
Procédé d'assemblage d'un système de génération d'énergie éolienne

(30) Priority: 23.04.2013 JP 2013089943
(43) Date of publication of application: 29.10.2014
(73) Proprietor: Hitachi, Ltd., Tokyo 100-8280 (JP)
(72) Inventor: Yu, Juhyun, Tokyo, 100-8280 (JP); Saeki, Mitsuru, Tokyo, 100-8280 (JP); Sano, Takahiko, Tokyo, 100-8280 (JP); Tanaka, Kouhei, Tokyo, 100-8280 (JP); Inamura, Shingo, Tokyo, 100-8280 (JP)
(74) Representative: MERH-IP Matias Erny Reichl Hoffmann Patentanwälte PartG mbB

(56) References cited:
- EP-A1- 2 006 471
- EP-A1- 2 161 162
- US-A1- 2011 148 115
- US-A1- 2012 090 501
- US-A1- 2012 285 118

## Description

### FIELD OF THE INVENTION

The present invention relates to assembly methods of wind power generation systems, and more particularly to an assembly method of a wind power generation system suitable for horizontal assembly of respective components included in the wind power generation system.

### BACKGROUND OF THE INVENTION

Wind power generation systems are getting larger every year in order to improve the efficiency of the power generation. Particularly, in places with fewer restrictions caused by the area of a land or an environment of the land, the wind power generation systems with a power of 5 MW or more have been developed. Such large wind power generation systems have a length of a blade of about 100 m, and an entire length of the wind power generation system close to 150 m.

However, with an increase in size of the wind power generation system, transportation for conveying a wind power generation system, such as a trailer, or a working machine, such as a crane, is also getting larger, which disadvantageously causes many problems, including the increase in cost and time for working on-site.

For this reason, Japanese Unexamined Patent Publication No. 2002-147340 discloses the horizontal assembly of respective components included in a wind power generation system, specifically, that the respective components of the wind power generation system, such as a tower, a nacelle, a hub, and blades are horizontally assembled together using a crane or the like at low elevations.

In general, components of a wind power generation system are normally assembled in turn vertically upward from the bottom thereof with respect to the ground. The large-sized windmill has a height of about 100 m (exceeding 100 m in some cases), and thus has several issues, such as a high risk of working at heights, or high working costs (for example, a high risk of working at high elevations, and high working costs, including expenses for rental of a large-sized crane, conveyance of a crane on-site, construction of a work office, and the like). In the above-mentioned assembly method of the wind power generation system, the components of the system cannot be assembled except for the on-site location. Unlike working in a factory, the on-site working tends to lack preparation, such as working systems, increasing a construction period, and also tends to lack safety systems, increasing a risk of working.

Although Japanese Unexamined Patent Publication No. 2002-147340 has proposed the horizontal assembly of the respective components included in the wind power generation system using a crane at low elevations in order to improve the above-mentioned points, all the respective components are conveyed by the crane, which is problematic in terms of safety, and working stands for putting the respective components thereon are required, which leads to the increase in cost and time. These points are desired to be improved.

Finally, US2011/148115 discloses the installation of an offshore wind turbine wherein the tower, nacelle and rotor are preassembled onshore. The tower segments are loaded on carriages and the wind turbine is preassembled horizontally.

The present invention has been made in view of the foregoing points, and it is an object of the present invention to provide an assembly method of a wind power generation system that can reduce a working time while enhancing the safety of the assembly work.

### SUMMARY OF THE INVENTION

In order to achieve the object, a method for assembling a wind power generation system according to the invention includes using a carriage including a vehicle body and a rack, the wind power generation system comprising a rotor including a hub and blades, a nacelle for accommodating therein at least a generator connected to the rotor via a main shaft connected to the hub, and a tower supporting the nacelle on a top portion thereof, and having an opposite side thereof to the top portion fixed to a foundation, the tower including separated tower parts, the method of assembling the wind power generation system comprising the steps of:
- mounting and fixing each of the respective separated tower parts of the tower on the rack of a respective carriage in a direction that makes an axial direction of the respective tower part substantially horizontal,
- moving and connecting the carriages on which separated tower parts of the tower are mounted to each other in this state,
- aligning the separated tower parts of the tower, after being mounted and fixed to respective racks of carriages, by moving the racks by an alignment mechanism included in the carriage, the alignment mechanism being configured to allow the rack of the carriage to move with respect to the vehicle body in at least two axial directions of three axial directions X, Y, and Z, and to rotate with respect to the vehicle body around at least two axial directions of three axial directions X, Y, and Z,
- coupling and fixing the aligned tower parts together to form the tower, and coupling and fixing the nacelle and the uppermost tower part of the tower together.

The present invention has effects that can reduce the working time, while enhancing the safety of the assembly work, and thus is very useful for assembling the wind power generation system.

### BRIEF DESCRIPTION OF THE DRAWINGS

FIG. 1 is a diagram showing a wind power generation system to which an assembly method of the present invention is applied;
FIGS. 2A and 2B are a front view and a side view of the state of supporting a tower by a carriage used in the assembly method of the wind power generation system in the present invention, respectively;
FIGS. 3A to 3F are diagrams for explaining the operation of an alignment mechanism of the carriage used in the assembly method of the wind power generation system in the present invention;
FIG. 4 is a diagram showing the entire structure of the carriage used in the assembly method of the wind power generation system in the present invention;
FIGS. 5A to 5E are diagrams for explaining the assembly work of the tower in the assembly method of the wind power generation system in the present invention;
FIGS. 6A and 6B are diagrams for explaining the assembly of a nacelle to the tower in the state shown in FIG. 5;
FIG. 7 is a flowchart for explaining the assembly method of the wind power generation system in the present invention;
FIG. 8 is a diagram for explaining the assembly of a rotor to the nacelle in the state shown in FIG. 6; and
FIG. 9 is a diagram showing the completion of the assembly of the wind power generation system in the assembly method of the present invention.

### DETAILED DESCRIPTION OF THE PREFERRED EMBODIMENTS

In the following, an assembly method of a wind power generation system in the present invention will be described based on preferred embodiments shown. The same components are designated by the same reference characters through the accompanying drawings.

### [First Embodiment]

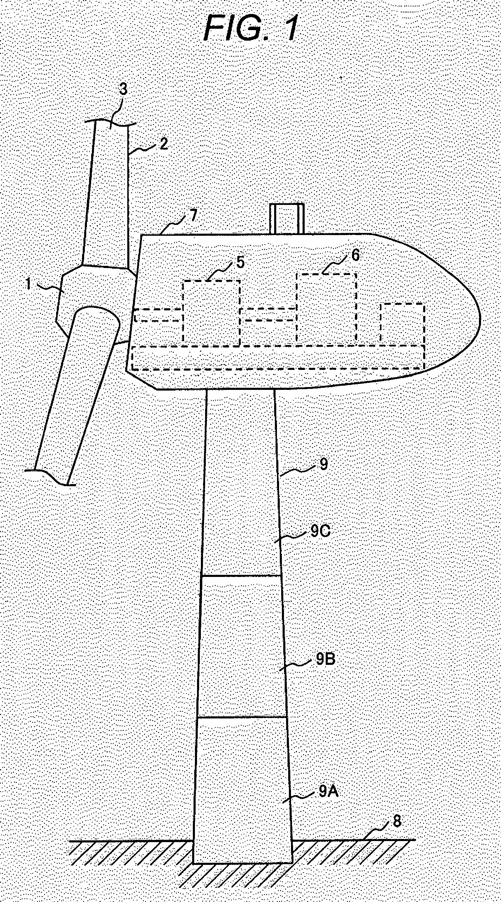

First, before explaining the preferred embodiments of the present invention, a wind power generation system to which the assembly method of a wind power generation system of the present invention is applied will be described below using FIG. 1.

As shown in FIG. 1, the wind power generation system substantially includes a rotor 3 composed of a hub 1 and blades 2, a nacelle 7 for accommodating therein at least a gear box 5 and a generator 6 both connected to the rotor 3 via a main shaft 4 connected to the hub 1, and a tower 9 supporting the nacelle 7 by its top portion, and having an opposite side to the top portion fixed to a foundation 8, the tower 9 including separated tower parts (in this embodiment, three separated parts, namely, a first section tower 9A, a second section tower 9B, and a third section tower 9C).

In this embodiment, when assembling the wind power generation system with the above structure, the nacelle 7 and the tower 9 are laterally assembled together by using carriages to be described later, and the rotor 3 is fixed to the laterally-facing nacelle 7.

More specifically, when assembling the wind power generation system with the above structure, the assembly method includes the step of laterally assembling the tower 9 by mounting the respective separated tower parts of the tower 9 (first section tower 9A, the second section tower 9B, and the third section tower 9C) on carriages while being laterally facing, moving the carriages in this state, and then coupling and fixing the respective separated first section tower 9A, second section tower 9B, and third section tower 9C together. The assembly method also includes the steps of: coupling and fixing the nacelle 7 to the third section tower 9c located on the top portion side of the tower 9 laterally-facing by mounting the nacelle 7 on a carriage such that the axis direction of the nacelle 7 is oriented in the direction perpendicular to the horizontal direction of the tower 9, and moving the nacelle 7 in this state; and coupling and fixing the rotor 3 conveyed from the air over, to the nacelle 7.

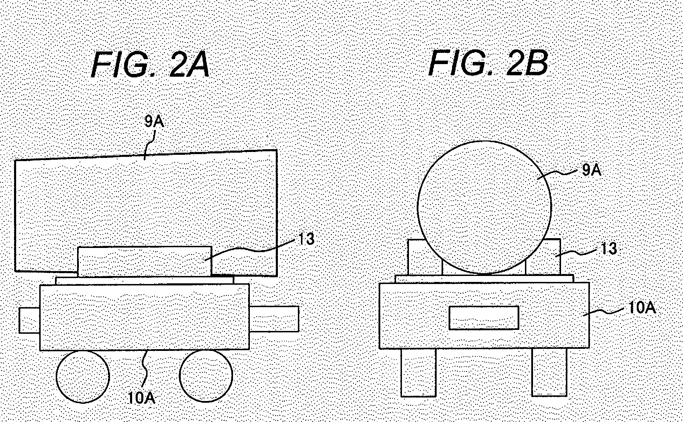

Next, a carriage 10 used in the assembly method of the wind power generation system of this embodiment will bedescribed using FIGS. 2 to 4.

FIGS. 2A and 2B show the state in which the first section tower 9A is supported and fixed by and to a first carriage 10A used in the assembly method of the present invention (the details of which will be described later).

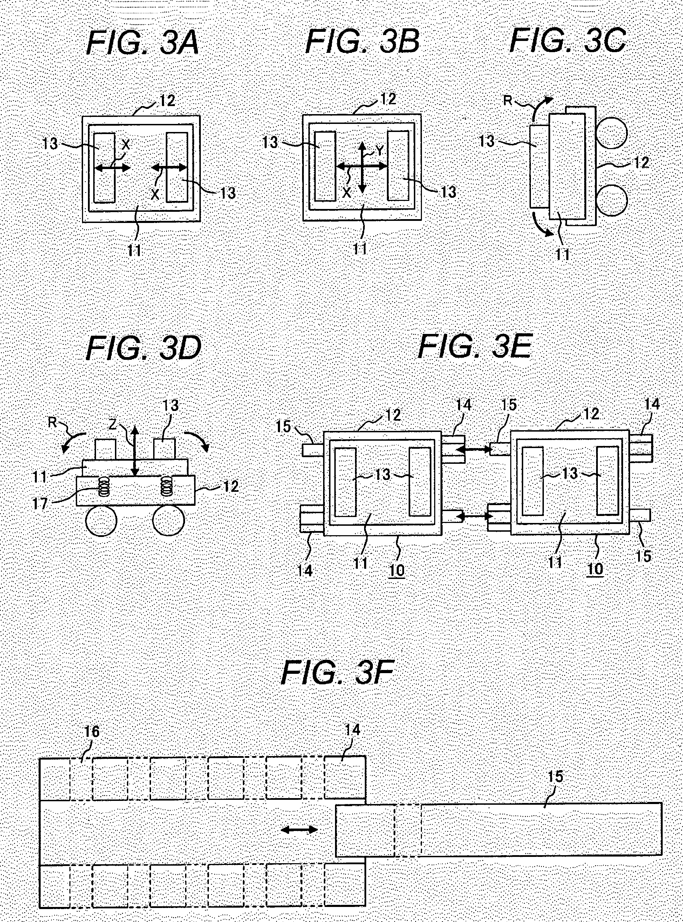

As shown in FIGS 3A, 3B, 3C, and 3D, the above-mentioned carriage 10 includes a rack 11 and a vehicle body 12. The rack 11 can move in at least two axial directions among three axial directions XYZ (in this embodiment, among three directions, namely, a left-right direction (direction X), a front-back direction (direction Y), and an upper-lower direction (direction Z)) with respect to the vehicle body 12, and also can rotate (change its angle) with respect to at least two axial directions (in this embodiment, in a direction indicated by the arrow R shown in FIGS. 3C and 3D), which constitutes an alignment mechanism.

The alignment mechanism enables fine adjustment of the position of a part (for example, the tower 9) mounted on the rack 11 after the vehicle body 12 is coupled and fixed to a vehicle body 12 of another carriage 10. The rack 11 is provided with a support portion 13 for fixing parts. As shown in Fig. 3A, the support portion 13 moves over a rail (not shown) in the left-right direction (direction X), thereby enabling the fine adjustment of the positions of the parts (for example, tower 9) to support and fix the parts.

Further, as shown in Figs. 3E and 3F, the vehicle body 12 includes female couplings 14 and male couplings 15. The female coupling 14 and the male coupling 15 can be connected to each other to fix and combine the adjacent carriages 10 together. As shown in Fig. 3F, the female coupling 14 is provided with a plurality of pin holes 16 for fixing the male coupling 15, so that these couplings can be fixed according to the positions of the parts (for example, tower 9) mounted on the two adjacent carriages 10. As shown in FIG. 3D, spring mechanisms 17 are set between the rack 11 and the vehicle body 12, and thus can reduce a load applied on the wind power generation system due to vibration during movement of the carriage 10 as it is.

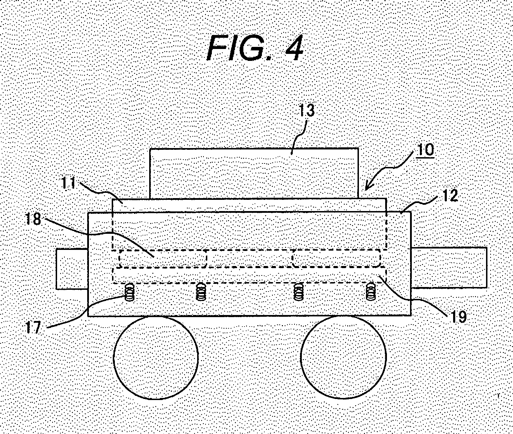

As shown in FIG. 4, the carriage 10 is provided with a hydraulic device 18 between the vehicle body 12 and the rack 11, whereby the force from the hydraulic device 18 mechanically moves the rack 11 with respect to the vehicle body 12.

In this embodiment, the hydraulic devices 18 are disposed in four positions between the rack 11 and the vehicle body 12. Each of the hydraulic devices can be independently moved in the height direction to adjust the height and angle of the rack 11 with respect to the vehicle body 12. Under the hydraulic device 18, a hydraulic motor (not shown) and a guide 19 are mounted, so that the rack 11 can be moved in four directions, namely, in the left-right direction and in the front-back direction on the plane with respect to the vehicle body 12. Spring mechanisms 17 are disposed between the hydraulic motor and a part of the vehicle body 12 under the guide 19. The spring mechanisms 17 can suppress the force transferred to the rack 11 due to vibration or impact of the vehicle body 12.

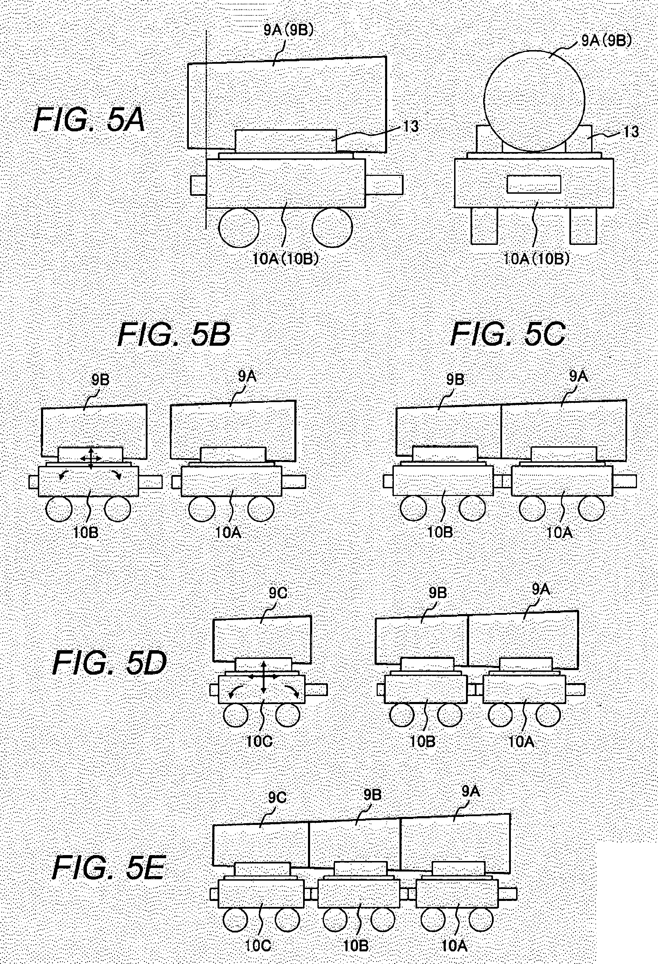

Now, a working procedure for the assembly method of the windpower generation system in this embodiment will be described in detail with reference to FIGS. 5 to 9.

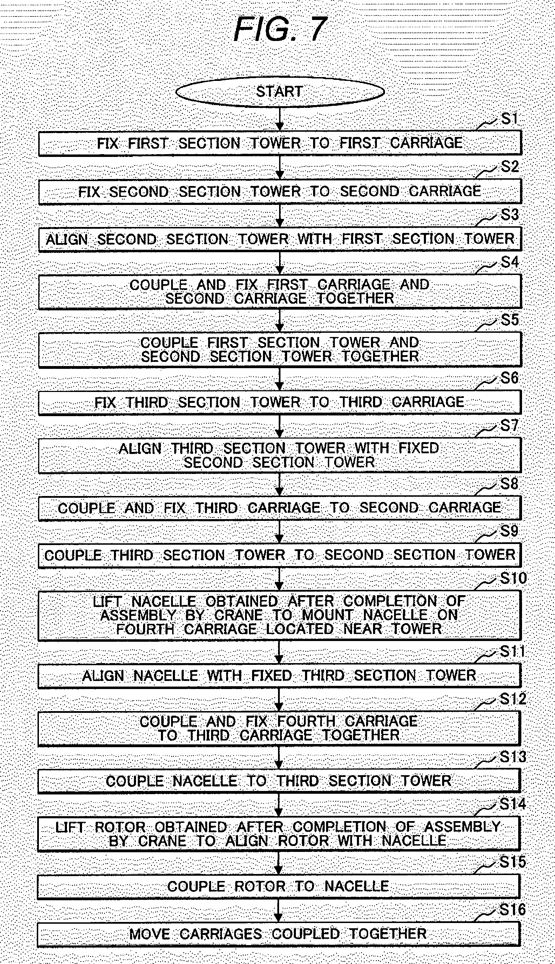

First, the first section tower 9A is laterally fixed to the first carriage 10A (in the direction that makes the axial direction of a cylinder substantially horizontal) (in step 1 of Fig. 7), and the second section tower 9B is laterally fixed to the second carriage 10B (in step 2 of Fig. 7). At this time, as shown in Fig. 5A, a part of the first section tower 9A or second section tower 9B is disposed to protrude outward with respect to the vehicle body 12 of the first carriage 10A or second carriage 10B. The first section tower 9A and second section tower 9B are linearly supported and fixed from the left and right sides by the support portions 13 not to move under the weight thereof.

Then, the first carriage 10A and second carriage 10B with the first section tower 9A and second section tower 9B mounted and fixed thereon, respectively, are moved to cause a connection portion of the first section tower 9A to face a corresponding connection portion of the second section tower 9B as shown in Fig. 5B. The first section tower 9A and second section tower 9B are aligned with each other by the alignment mechanisms of the first and second carriages 10A and 10B (in step 3 of Fig. 7). Further, as shown in Fig. 5C, the first carriage 10A and the second carriage 10B are coupled and fixed together (in step 4 of Fig. 7). Thereafter, the racks 11 are moved by the alignment mechanism to perform the fine adjustment of positions of the first section tower 9Aandthe second section tower 9B. Further, the first section tower 9A and the second section tower 9B are coupled (in step 5 of Fig. 7).

Next, the third section tower 9C is laterally fixed to the third carriage 10C (in step 6 of Fig. 7). The third carriage 10C with the third section tower 9C fixed and mounted thereon is moved to cause a connection portion of the second section tower 9B to face a connection portion of the third section tower 9C as shown in FIG. 5D. The second section tower 9B and third section tower 9C are aligned with each other by the alignment mechanisms of the second and third carriages 10B and 10C (in step 7 of Fig. 7). Further, the second carriage 10B and the third carriage 10C are coupled and fixed together (in step 8 of Fig. 7). Thereafter, the racks 11 are moved by the alignment mechanism to perform the fine adjustment of positions of the second section tower 9B and the third section tower 9C. Further, the second section tower 9B and the third section tower 9C are coupled (in step 9 of Fig. 7).

In this way, the first section tower 9A, the second section tower 9B, and the third section 9C are coupled together to assembly the tower 9. The state of the tower 9 is shown in FIG. 5E.

In this way, the tower 9 is laterally assembled, which can reduce an occupation time for a large crane, and also can achieve connection work between the components of the tower 9 at the ground level, which is conventionally performed at high elevations. Thus, such assembly can reduce the working time and can also enhance the safety of the work.

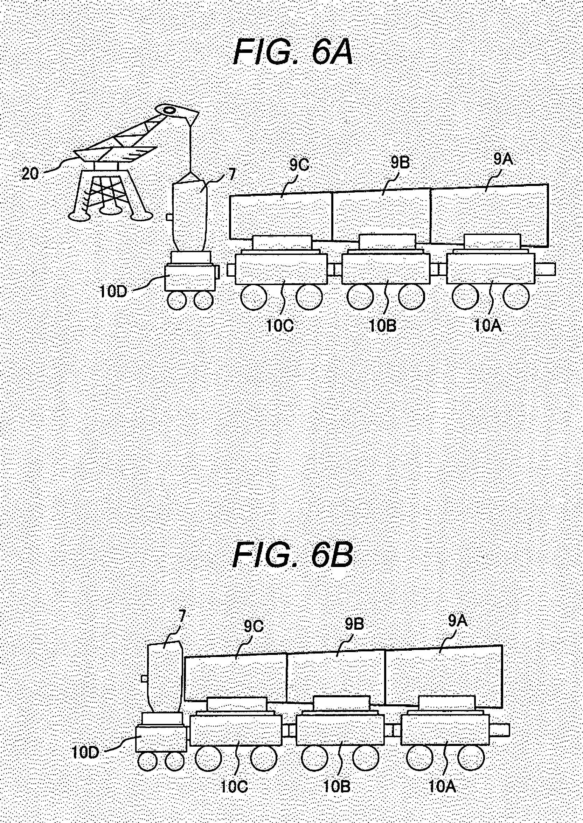

Then, as shown in FIG. 6A, after completion of the assembly of the nacelle 7, the nacelle 7 is lifted by a crane 20, and then mounted and fixed on the fourth carriage 10D located near the tower 9 in such a manner that the axial direction of the nacelle 7 is oriented perpendicular to the horizontal directions of the tower 9 (in step 10 of Fig. 7). After fixing the nacelle 7 onto the fourth carriage 10D, the crane 20 can be removed therefrom, but is desirably used as it is in order to prevent falling of the nacelle.

Then, as shown in FIG. 6B, also in the fourth carriage 10D mounting the nacelle 7 thereon, the nacelle 7 is aligned with the third section tower 9C (in step 11 of Fig. 7). After the alignment therebetween, and then the fourth carriage 10D with the nacelle 7 fixed thereto is coupled and fixed to the third carriage 10C with the third section tower 9C fixed thereto (in step 12 of Fig. 7). Then, after moving the racks 11 to perform the fine adjustment of the positions thereof, the nacelle 7 is coupled to the third section tower 9C (in step 13 of Fig. 7). FIG. 6B shows the state after assembly of the nacelle 7 to the tower 9.

In this way, the nacelle 7 is laterally assembled, which can achieve connection work at the ground level, which is conventionally at high elevations, thus reducing a working time and enhancing the safety of the work.

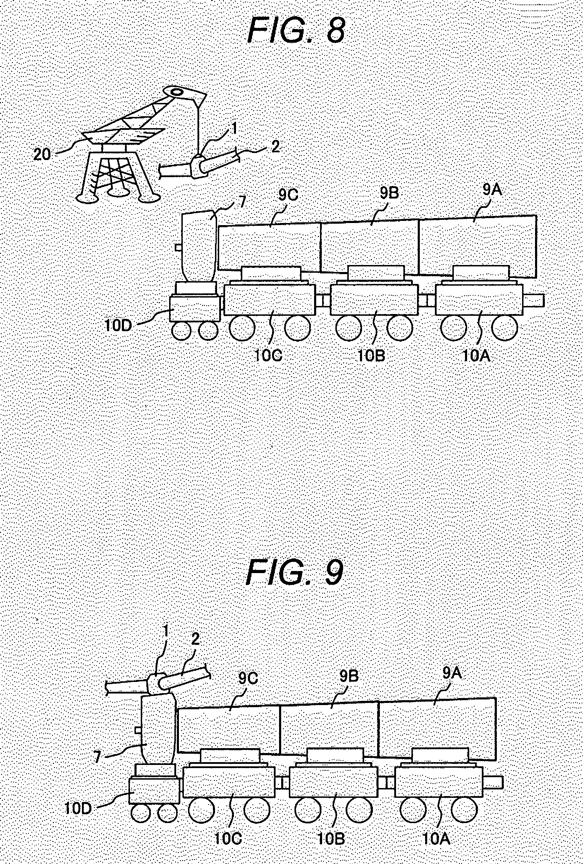

Next, Fig. 8 shows the assembly state of the rotor 3 starting from the state shown in FIG. 6B. The hub 1 and the blades 2 are assembled in advance. After completion of the assembly, as shown in Fig. 8, the rotor 3 is lifted by the crane 20, and moved over the nacelle 7, so that the rotor 3 is aligned with the nacelle 7 (in step 14 of FIG. 7). Thereafter, the rotor 3 is coupled to the nacelle 7 (in step 15 of FIG. 7).

After assembly of the hub 1, the blades 2 can be assembled one by one. In assembling each of the blades 2 separately, a number of means, including a measure for having good balance, a supporting member, and the like are required. However, by mounting the hub 1 including the assembled blades 2 at one time, the assembly can be easily achieved without the necessity of adjusting the balance between the components and using a support member or the like.

Finally, as shown in Fig. 9, after entire completion of the assembly of the wind power generation system, the respective components included in the wind power generation system can be moved to a predetermined place (in step 16 of FIG. 7) while being respectively mounted on the first carriage 10A, the second carriage 10B, the third carriage 10C, and the fourth carriage 10D coupled together.

After the assembly of the wind power generation system near a port, the respective components coupled together and mounted on the first, second, third, and fourth carriages 10A, 10B, 10C, and 10D are transported to the port where a large-sized crane is set, and then can be mounted on a ship or the like.

Further, the wind power generation system of this embodiment is of a downwind type (which is a wind power generation system including the blades 2 disposed behind the nacelle 7 with respect to the wind direction) equipped with coning (with flexible blades: when the wind is strong, the blades 2 are bent in the direction of flow of the wind to receive wind pressure, thereby decreasing air pressure around the system).
The blades 2 are positioned above the nacelle 7, which reduces a risk of contact with the ground or tower 9, enabling the safer transportation.

Such an assembly method of this embodiment has effects that can enhance the safety of the assembly work of the wind power generation system, and which can also reduce the working time.

The present invention is not limited to the above embodiments, and can include various modifications. For example, the above embodiments have been described in detail for easy understanding of the present invention. The present invention is not limited to the structure including all components described above. A part of the structure of one embodiment can be replaced by the structure of another embodiment. The structure of another embodiment can be added to the structure of one embodiment. The addition, deletion, or replacement of another structure can be performed on a part of the structure of each embodiment.

### Reference Signs List

1... hub
2... blade
3... rotor
4... main shaft
5... gear box
6... generator
7... nacelle
8... foundation
9... tower
9A... first section tower
9B... second section tower
9C... third section tower
10... carriage
10A... first carriage
10B... second carriage
10C... third carriage
10D... fourth carriage
11... rack
12... vehicle body
13... support portion
14... female coupling
15... male coupling
16... pin hole
17... spring mechanism
18... hydraulic device
19... guide
20... crane

## Claims

1. A method for assembling, a wind power generation system using a carriage (10) including a vehicle body (12) and a rack (11), the wind power generation system comprising a rotor (3) including a hub (1) and blades (2), a nacelle (7) for accommodating therein at least a generator (6) connected to the rotor (3) via a main shaft (4) connected to the hub (1), and a tower (9) supporting the nacelle (7) on a top portion thereof, and having an opposite side thereof to the top portion fixed to a foundation (8), the tower (9) including separated tower parts, the method of assembling the wind power generation system comprising the steps of:
- mounting and fixing each of the respective separated tower parts of the tower (9) on the rack of a respective carriage (10) in a direction that makes an axial direction of the respective tower part substantially horizontal,
- moving and connecting the carriages (10) on which separated tower parts of the tower (9) are mounted to each other in this state,
- aligning the separated tower parts of the tower (9), after being mounted and fixed to respective racks of carriages, by moving the racks by an alignment mechanism included in the carriage (10), the alignment mechanism being configured to allow the rack (11) of the carriage (10) to move with respect to the vehicle body (12) in at least two axial directions of three axial directions X, Y, and Z, and to rotate with respect to the vehicle body (12) around at least two axial directions of three axial directions X, Y, and Z,
- coupling and fixing the aligned tower parts together to form the tower, and
coupling and fixing the nacelle (7) and the uppermost tower part of the tower together.

2. Method for assembling a wind power generation system, according to claim 1,
wherein the nacelle (7) and the tower (9) are assembled together while being mounted carriages (10), and the rotor (3) is fixed to the nacelle (7).

3. Method for assembling a wind power generation system according to claim 1 or 2, comprising the steps of:
coupling and fixing the nacelle (7) to an uppermost tower part of the tower by mounting the nacelle (7) on a carriage (10) such that an axis direction of the nacelle (7) is oriented in a direction perpendicular to a horizontal direction of the tower (9), and moving the carriage (10) in this state; and
coupling and fixing the rotor (3) conveyed from the air over, to the nacelle (7).

4. Method for assembling a wind power generation system according to any one of claims 1 to 3, wherein the hub (1) and the blade (2) are assembled together in advance, and after completion of the assembly, the rotor (3) is lifted by a crane (20) to move to above the nacelle (7), aligned with the nacelle (7), and then coupled to the nacelle (7).

5. Method for assembling a wind power generation system according to any one of claims 1 to 4, wherein the rack (11) of the carriage (10) is provided with a support portion (13), and the support portion (13) supports and fixes the tower (9) or nacelle (7) onto the rack (11) of the carriage (10).

6. Method for assembling a wind power generation system according to according to any one of claims 1 to 5,
wherein the vehicle body (12) is provided with a female coupling (14) and a male coupling (15), and
wherein the carriages (10) are fixed together by connecting the female coupling (14) with the male coupling (15).

7. Method for assembling a wind power generation system according to any one of claims 1 to 6,
wherein a hydraulic device (18) is disposed between the rack (11) and the vehicle body (12) of the carriage (10), and
wherein the hydraulic device (18) is adapted to adjust a height and/or angle of the rack (11) with respect to the vehicle body (12).

8. Method for assembling a wind power generation system according to claim 7,
wherein a hydraulic motor and a guide (19) are set under the hydraulic device (18), and
wherein the hydraulic motor and the guide (19) cause the rack (11) to move in the front-back and left-right directions on a plane with respect to the vehicle body (12).

9. Method for assembling a wind power generation system according to claim 8,
wherein a spring mechanism (17) is disposed between the hydraulic motor and the vehicle body (12) under the guide (19), and
wherein the spring mechanism (17) absorbs vibration of the carriage (10) during moving.

## Patentansprüche

1. Verfahren zum Montieren eines Windstromproduktionssystems unter Verwendung eines Schlittens (10), der einen Fahrzeugkörper (12) und ein Gestell (11) enthält, wobei das Windstromproduktionssystem einen Rotor (3) mit einer Nabe (1) und mit Blättern (2), eine Gondel (7) für die Aufnahme wenigstens eines Generators (6), der mit dem Rotor (3) über eine mit der Nabe (1) verbundene Hauptwelle (4) verbunden ist, und einen Turm (9), der die Gondel (7) auf seinem oberen Abschnitt trägt und dessen Seite, die dem oberen Abschnitt gegenüberliegt, auf einem Fundament (8) befestigt ist, umfasst, wobei der Turm (9) getrennte Turmteile aufweist, wobei das Verfahren zum Montieren des Windstromproduktionssystems die folgenden Schritte umfasst:
- Montieren und Befestigen jedes der jeweiligen getrennten Turmteile des Turms (9) auf dem Gestell eines jeweiligen Schlittens (10) in einer Richtung, die eine axiale Richtung des jeweiligen Turmteils im Wesentlichen horizontal orientiert,
- Bewegen und Verbinden der Schlitten (10), auf denen die getrennten Turmteile des Turms (9) montiert sind, miteinander in diesem Zustand,
- Ausrichten der getrennten Turmteile des Turms (9), nachdem sie auf den jeweiligen Gestellen von Schlitten montiert und befestigt worden sind, durch Bewegen der Gestelle mittels eines Ausrichtmechanismus, der in dem Schlitten (10) enthalten ist, wobei der Ausrichtmechanismus konfiguriert ist, dem Gestell (11) des Schlittens (10) zu erlauben, sich in Bezug auf den Fahrzeugkörper (12) in wenigstens zwei axialen Richtungen von drei axialen Richtungen X, Y und Z zu bewegen und sich in Bezug auf den Fahrzeugkörper (12) um wenigstens zwei axiale Richtungen von drei axialen Richtungen X, Y und Z zu drehen,
- Koppeln und Befestigen der ausgerichteten Turmteile aneinander, um den Turm zu bilden, und
Koppeln und Befestigen der Gondel (7) und des obersten Turmteils des Turms aneinander.

2. Verfahren zum Montieren eines Windstromproduktionssystems nach Anspruch 1,
wobei die Gondel (7) und der Turm (9) zusammengefügt werden, während sie an Schlitten (10) montiert sind, und der Rotor (3) an der Gondel (7) befestigt wird.

3. Verfahren zum Montieren eines Windstromproduktionssystems nach Anspruch 1 oder 2, das die folgenden Schritte umfasst:
Koppeln und Befestigen der Gondel (7) an einem obersten Turmteil des Turms durch Montieren der Gondel (7) an einem Schlitten (10), derart, dass eine Achsenrichtung der Gondel (7) in einer Richtung senkrecht zu einer horizontalen Richtung des Turms (9) orientiert ist, und Bewegen des Schlittens (10) in diesem Zustand; und
Koppeln und Befestigen des Rotors (3), der von oben herantransportiert wird, an der Gondel (7).

4. Verfahren zum Montieren eines Windstromproduktionssystems nach einem der Ansprüche 1 bis 3, wobei die Nabe (1) und die Schaufel (2) im Voraus zusammengefügt werden und wobei nach Abschluss der Zusammenfügung der Rotor (3) durch einen Kran (20) angehoben wird, um ihn über die Gondel (7) zu bewegen, auf die Gondel (7) ausgerichtet wird und dann mit der Gondel (7) gekoppelt wird.

5. Verfahren zum Montieren eines Windstromproduktionssystems nach einem der Ansprüche 1 bis 4, wobei das Gestell (11) und der Schlitten (10) mit einem Tragabschnitt (13) versehen sind und der Tragabschnitt (13) den Turm (9) oder die Gondel (7) auf dem Gestell (11) des Schlittens (10) trägt und befestigt.

6. Verfahren zum Montieren eines Windstromproduktionssystems nach einem der Ansprüche 1 bis 5,
wobei der Fahrzeugkörper (12) mit einer Buchsenkupplung (14) und einer Steckkupplung (15) versehen ist und
wobei die Schlitten (10) durch Verbinden der Buchsenkupplung (14) und der Steckkupplung (15) aneinander befestigt werden.

7. Verfahren zum Montieren eines Windstromproduktionssystems nach einem der Ansprüche 1 bis 6,
wobei eine Hydraulikvorrichtung (18) zwischen dem Gestell (11) und dem Fahrzeugkörper (12) des Schlittens (10) angeordnet ist und
wobei die Hydraulikvorrichtung (18) dafür ausgelegt ist, eine Höhe und/oder einen Winkel des Gestells (11) in Bezug auf den Fahrzeugkörper (12) einzustellen.

8. Verfahren zum Montieren eines Windstromproduktionssystems nach Anspruch 7,
wobei ein Hydraulikmotor und eine Führung (19) unter der Hydraulikvorrichtung (18) angeordnet werden und
wobei der Hydraulikmotor und die Führung (19) bewirken, dass sich das Gestell (11) in einer Ebene in Bezug auf die Fahrzeugkörper (12) in Vorwärts/Rückwärts-Richtung und in Links/Rechts-Richtung bewegt.

9. Verfahren zum Montieren eines Windstromproduktionssystems nach Anspruch 8,
wobei ein Federmechanismus (17) zwischen dem Hydraulikmotor und dem Fahrzeugkörper (12) unter der Führung (19) angeordnet ist und
wobei der Federmechanismus (17) Vibrationen des Schlittens (10) während der Bewegung absorbiert.

## Revendications

1. Procédé pour assembler un système de génération d'énergie éolienne en utilisant un chariot (10) incluant un corps de véhicule (12) et un support (11), le système de génération d'énergie éolienne comprenant un rotor (3) incluant un moyeu (1) et des palles (2), une nacelle (7) pour loger à l'intérieur au moins un générateur (6) relié au rotor (3) via un arbre principal (4) relié au moyeu (1), et une tour (9) supportant la nacelle (7) sur une portion au sommet de celle-ci, et ayant un côté d'elle-même, opposé à la portion de sommet, fixé sur une fondation (8), la tour (9) incluant des parties de tour séparées, le procédé d'assemblage du système de génération d'énergie éolienne comprenant les étapes consistant à :
- monter et fixer chacune des parties de tour séparées respectives de la tour (9) sur le support d'un chariot respectif (10) dans une direction qui rend une direction axiale de la partie de tour respective sensiblement horizontale,
- déplacer et relier les chariots (10) sur lesquels sont montées des parties séparées de la tour (9) les uns aux autres dans cette situation,
- aligner les parties séparées de la tour (9), après les avoir montées et fixées sur des supports respectifs des chariots, en déplaçant les supports par un mécanisme d'alignement inclus dans le chariot (10), le mécanisme d'alignement étant configuré pour permettre au support (11) du chariot (10) de se déplacer par rapport au corps de véhicule (12) au moins dans deux directions axiales parmi trois directions axiales X, Y et Z, et de tourner par rapport au corps de véhicule (12) autour d'au moins deux directions axiales parmi les trois directions axiales X, Y et Z,
- coupler et fixer les parties de tour alignées ensemble pour former la tour, et
- coupler et fixer la nacelle (7) et la partie la plus haute de la tour ensemble.

2. Procédé pour assembler un système de génération d'énergie éolienne selon la revendication 1,
dans lequel la nacelle (7) et la tour (9) sont assemblées ensemble alors qu'elles sont montées sur les chariots (10), et le rotor (3) est fixé sur la nacelle (7).

3. Procédé pour assembler un système de génération d'énergie éolienne selon la revendication 1 ou 2, comprenant les étapes consistant à :
coupler et fixer la nacelle (7) sur une partie tout en haut de la tour en montant la nacelle (7) sur un chariot (10), de sorte qu'une direction axiale de la nacelle (7) est orientée dans une direction perpendiculaire à une direction horizontale de la tour (9), et déplacer le chariot (10) dans cette situation ; et
coupler et fixer le rotor (3), transporté par la voie des airs, sur la nacelle (7).

4. Procédé pour assembler un système de génération d'énergie éolienne selon l'une quelconque des revendications 1 à 3, dans lequel le moyeu (1) et la pale (2) sont assemblés ensemble à l'avance et, après avoir terminé l'assemblage, le rotor (3) est soulevé par une grue (20) pour le déplacer jusqu'au-dessus de la nacelle (7), aligné avec la nacelle (7), et ensuite couplé à la nacelle (7).

5. Procédé pour assembler un système de génération d'énergie éolienne selon l'une quelconque des revendications 1 à 4, dans lequel le support (11) du chariot (10) est doté d'une portion de support (13), et la portion de support (13) supporte et fixe la tour (9) ou la nacelle (7) sur le support (11) du chariot (10).

6. Procédé pour assembler un système de génération d'énergie éolienne selon l'une quelconque des revendications 1 à 5,
dans lequel le corps de véhicule (12) est doté d'un couplage femelle (14) et d'un couplage mâle (15), et
dans lequel les chariots (10) sont fixés ensemble en reliant le couplage femelle (14) avec le couplage mâle (15).

7. Procédé pour assembler un système de génération d'énergie éolienne selon l'une quelconque des revendications 1 à 6,
dans lequel un dispositif hydraulique (18) est disposé entre le support (11) et le corps de véhicule (12) du chariot (10), et
dans lequel le dispositif hydraulique (18) est adapté à ajuster une hauteur et/ou un angle du support (11) par rapport au corps de véhicule (12).

8. Procédé pour assembler un système de génération d'énergie éolienne selon la revendication 7,
dans lequel un moteur hydraulique et un guide (19) sont placés au-dessous du dispositif hydraulique (18), et
dans lequel le moteur hydraulique et le guide (19) amènent le support (11) à se déplacer dans la direction avant/arrière et dans la direction gauche/droite sur un plan par rapport au corps de véhicule (12).

9. Procédé pour assembler un système de génération d'énergie éolienne selon la revendication 8,
dans lequel un mécanisme à ressort (17) est disposé entre le moteur hydraulique et le corps de véhicule (12) sous le guide (19), et
dans lequel le mécanisme à ressort (17) absorbe les vibrations du chariot (10) pendant le déplacement.
